Europäisches Patentamt

European Patent Office

Office européen des brevets

(19)

(11) Publication number: **0 100 825**
**A2**

# (12) EUROPEAN PATENT APPLICATION

(21) Application number: **83104955.6**

(22) Date of filing: **19.05.83**

(51) Int. Cl.³: **G 06 F 11/10**

(30) Priority: **22.06.82 US 391062**

(43) Date of publication of application:
**22.02.84 Bulletin 84/8**

(84) Designated Contracting States:
**DE FR GB**

(71) Applicant: **International Business Machines Corporation**
**Old Orchard Road**
**Armonk, N.Y. 10504(US)**

(72) Inventor: **Bannon, Robert Daniel**
**1070 N.W. 5th Street**
**Boca Raton Florida 33432(US)**

(72) Inventor: **Bhansali, Mahendra Mulchandbhai**
**8120 Twin Lakes Drive**
**Boca Raton Florida 33434(US)**

(72) Inventor: **Minnich, Walter Dale**
**3200 N.W. 114th Terrace**
**Coral Springs Florida 33065(US)**

(72) Inventor: **Finney, Damon W.**
**1135 S.W. 18th Street**
**Boca Raton Florida 33432(US)**

(72) Inventor: **Suarez, Gustavo Armando**
**1074 N.W. 13th Street Apt. 165C**
**Boca Raton Florida 33432(US)**

(72) Inventor: **Chisholm, Douglas Roderick**
**3512 Chatelaine Boulevard**
**Delray Beach, Florida 33445(US)**

(74) Representative: **Bonneau, Gérard**
**Compagnie IBM France Département de Propriété Industrielle**
**F-06610 La Gaude(FR)**

(54) **True single error correction and multiple error detection system.**

(57) A system for true single error correction and multiple bit failure detection for a memory system using multiple data bits per chip. An H-Matrix results in syndrome generation of bits that are unique for single bit failures that will not match syndromes generated by multiple bit failures. All multiple bit failures are detected without miscorrecting any single bits that have not failed. A first logic (40, 50) employs all syndrome bits in parallel inputs to determine the presence of a single bit failure for subsequent correction, and a second logic (70, 80, 90) receives all syndrome bits for detecting the presence of a multiple bit error in the data bits in the absence of a single bit failure.

EP 0 100 825 A2

./...

Croydon Printing Company Ltd.

FIG.2

## TRUE SINGLE ERROR CORRECTION AND MULTIPLE ERROR
## DETECTION SYSTEM

This invention relates to the correction of errors in data words stored in a data storage system and in particular, to a true single error correction and multiple error detection system.

The present invention finds particular utility in high density integrated circuit storage arrays. Developments in memory technology have resulted in storage chips having the capacity to store multiple data bits per chip with corresponding multiple outputs. Errors in the storage of data in these memories are generally classified as occurring due to two distinct causes. One is a non-destructive environmental phenomenon caused by impingement of atomic alpha particles. Those particles, present in ordinary background atomic radiation, have energy values vis-a-vis the data signal stored in the cell. When such cells are struck by atomic alpha particles, the binary values stored in the cell may flip to an opposite value. Hence a data error occurs. These errors are therefore transient, that is, intermittent errors, and are delineated as "soft" errors. The second major cause of error is the actual physical failure of one of the memory components. This failure produces a permanent or "hard" error.

It has been determined experimentally that in contemporary monolithic memory arrays, soft errors due to environmental effects are far more prevalent than hard errors occurring as a consequence of actual component failure. The failure rate of alpha particle induced errors may be in the order of one or two orders of magnitude higher than memory chip hard error failure rates. Moreover, as higher chip densities are attained, soft errors will be of even greater significance. The problem of dealing with these errors is a contemporary problem that will be exacerbated as memory technology advances.

Within this technology, schemes have been used to correct errors induced in memory storage of data, that is, correcting single errors and detecting the presence of a double error. Such systems known as error correcting codes (ECC) are traditionally used in memory systems which are organized on a single bit per chip, to check data read from a memory and correct incorrect single bit errors in a data word.  That is, conventional ECC systems utilizing single error correction - double error detection (SEC/DED) were configured utilizing single bit memory chips.  As such, there was no possibility of a multiple bit failure within a single chip for an ECC word.  In the case of a contemporary memory module utilizing 9 data bits per chip, soft failures and hard failures can cause 3, 4, 5, 6, 7, 8, or 9 bit failures which may or may not be detected utilizing conventional SEC/DED codes.  In such multiple data bit per chip systems, any multiple failure within a single chip which is undetected is called an escape.

There is therefore a requirement in such memory systems to define a technique whereby all single errors are detected and corrected and all escapes are detected.  There is also an implicit requirement that correction be only of bits that are actually in error.  The miscorrection of a correct bit itself induces an error and this must be eliminated if the error correcting scheme is to be workable.

The error correcting scheme should also not require extensive logic circuitry.  Additional circuitry slows overall processing or throughput time of the system and incurs a penalty of requiring additional processing space in an already crowded environment of integrated circuits.  A usable system should therefore minimize the need for external logic circuits for ECC processing.

Within the prior art, there are no known systems which are capable of performing these functions in higher density "by 9" chip arrays.  Hence, while the prior art is replete with a number of various SEC/DED codes, none find ready application in high density "by 9" chip array.  Reference is made to Hsiao, "A Class of Optimal Minimum Odd-Weight-Column SEC/DED Codes", IBM Journal of Reseach and Development, pp. 395-401, July 1970.  The system disclosed therein is considered to define "baseline" ECC schemes and, in one pertinent scheme, utilizes 16 data bits and 6 check bits so that the total number of bits written into the storage unit is a 22 bit word.  This prior art perceives the generation of an H-Matrix to perform ECC following specific criteria.  As shown therein, the H-Matrix is a code having minimum weight w so that every combination of w - 1 or fewer columns of the matrix is linearly independent.  The minimum weight requirement is recognized in the prior art as 4, thereby requiring that 3 or fewer columns of the H-Matrix be linearly independent.  Three constraints are imposed by Hsiao in the generation of the H-Matrix.  First, each column has an odd number of ones, that is, all column vectors are of odd weight.  Secondly, the total number of ones in the H-Matrix should be minimized.  Thirdly, the number of ones in each row of matrix should be equal or as close as possible to the average number, that is, the total number of ones in the matrix divided by the total number of rows.  These implementation rules are generally applicable to H-Matrix definition.

Reference is also made to European Patent Application N°42966 which extends the Hsiao teaching into a system dividing the data word into high and low density storage units.  Specifically, as set forth in that patent application, high density storage module is used to receive the data portion of the word and a low density unit receives the check bits forming the remaining portion of the data word.  The invention proceeds from the assumption that soft errors will not occur in the low density storage unit and accordingly, the check bits are assumed to be correct.  Consequently, the number of check bits can be reduced such that in a 16 data bit word only 5 check bits are needed.  Such a system, while offering important advantages in the reduction of the number of bits of storage required, is not architecturally configured for an efficient implementation in a multiple bit per chip system. That is, this ECC is applied to a "by 1" storage system.

Additional prior art systems achieving ECC or SEC/DED are known in the art. For example, U.S. Patent 3,656,107 relates to a method of detecting and correcting double errors by generating a specific set of syndrome S bits. If a double error occurs in a binary word, the syndrome S bits automatically operate a switching device which changes the bits of the binary word one at a time to correct one of the double errors. This correction is effectuated until the syndrome indicates that the double error has been eliminated. A new syndrome is then generated to locate the single remaining error. U.S. Patent 4,005,405 discloses a modified ECC utilizing 5 check bits for a 26 bit data word. Double error detection and therefore the ability to locate multiple bit failures is not perceived.

U.S. Patent 4,139,148 employs a SEC/DED with a divided common RAM with separate data and check bit locations. The H-Matrix and to hardware implementation employs 7 check bits for 38 data bits. Various coding parameters for the determination of the H-Matrix follows the known Hsiao technique. Correction of double bit errors is attained by saving previously occurring single error syndromes and using them to correct one error bit when a double bit error occurs in the single word in storage.

The prior art is also replete with a number of other references relating generally to the problem of SEC but are not germane to the problem of true single error detection and prevention of all escapes. This group of prior art includes U.S. Patents 3,735,105; 3,949,208 and IBM Technical Disclosure Bulletins, Vol. 10, No. 8, pp. 1275-76; Vol. 10, No. 10, pp. 1561-2; Vol. 15, No. 1, pp. 130-4; Vol. 20, No. 8, pp. 3187-8; Vol. 21, No. 10, pp. 4297-98; Vol. 22, No. 4, pp. 1607-13; and Vol. 22, No. 8, pp. 3833-34.

Additional prior art considered but deemed less germane includes U.S. Patents 4,100,403; 4,139,148; 4,163,147; 4,175,692; and 4,209,846.

A hallmark deficiency of the prior art is in the utilization of a 16 data bit and 6 check bit SEC/DED. In a "by 9" bit configuration this gives rise to a serious problem since the architecture of the ECC is incompatible with that chip architecture. Specifically, these codes will miscorrect single data bits that are not in error because of odd (J1) multiple bit failures. For example, there are 132 possible combinations of three bit failures utilizing the prior art 16, 6 code. Ninety-four of these bit failures will fail due to a syndrome allocated for a single data bit error. Accordingly, when a three bit error occurs there is a 71% chance of miscorrection for a single bit that in fact has not failed. A 5 bit failure in this code has a 63% chance of miscorrecting a single bit. Clearly, these percentages are incompatible with the fundamental nature of such systems, that is, correcting true single errors.

Another deficiency in the use of this code is that bits are wasted since typically a 27 bit offering is provided utilizing 3x9 granularity.

Given the deficiencies in the prior art, it is an object of this invention to provide a system for true single error correction in a high density storage system susceptible to multiple bit failures.

Another object of this invention is to define a true single error correction system that will detect multiple bit failures and yet will not miscorrect single bits.

These and other objects of the present invention are attained in a single error correction, multiple error detection system for data words stored in a memory having multiple data bits per chip, comprising a check bit generator receiving data bits and generating check bits in accordance with logical sequence, a syndrome bit generator for generating syndrome bits from the data and check bits, first logic receiving each of the syndrome bits and producing an output for determining the presence of a true single error in one of the data and check bits, and a second logic receiving each of the syndrome bits and the output of the first logic for detecting the presence of multiple bit error in the absence of a single bit error detected at the output of the first logic.

The first logic employs error locators processing The syndrome bits such that a determination of single bit failure is first made. If a single bit error has occurred, then the corresponding error locator is used to block an error indicator such that only a single bit failure can turn a particular circuit on.

Since the syndromes generated by multiple bit failures do not match syndromes for a single bit failure, the presence of one or more syndrome bit binary ones in the absence of a single bit error will indicate that the error is not of a single bit. The syndrome bits are therefore fed to a second logic such that the presence of an output coupled with an error locator output indicates a multiple failure.

This invention will be defined in greater detail with respect to the drawings and the description of the preferred embodiment which follows.

FIG. 1 is a diagram of the H-Matrix for a true single error correction and double error detection in accordance with the present invention; and

FIG. 2 is a schematic diagram of an implementation of the present invention.

The present invention is directed specifically to high density arrays having multiple data bits in a high density chip.

An example is an array of 16Kx9 chips. The "by 9" offering
of such a chip perceives that multiple bit errors may occur
and that such errors may in fact be odd numbered multiple bit
failures. Accordingly, the use of conventional SEC/ DED
systems will erroneously miscorrect single data bits that
are, in fact, not in error due to the fact that a syndrome
may be allocated for a single bit data error as a result of a
combination of an odd multiple bit failure within a chip.
That is, utilizing conventional detecting code schemes, a
syndrome allocated for a particular single data bit may be
generated as a consequence of an odd multiple bit failure not
involving that correct data bit. Utilizing the conventional
16, 6 code, there are 132 possible combinations of 3 bit
failures of which, 94 will fail due to a syndrome allocated
for a single data bit error. Accordingly, with 3 bit failures there is a 71% chance of miscorrection of a single bit
that in fact has not failed. The percentages of a 5 bit
failure miscorrecting a single bit are 63%.

Importantly, the 16, 6 code is inefficient with the "by 9"
offering since 5 bits of a 27 bit word are not utilized.
That is, the prior art use of six check bits will result in
surplus bits in each data word.

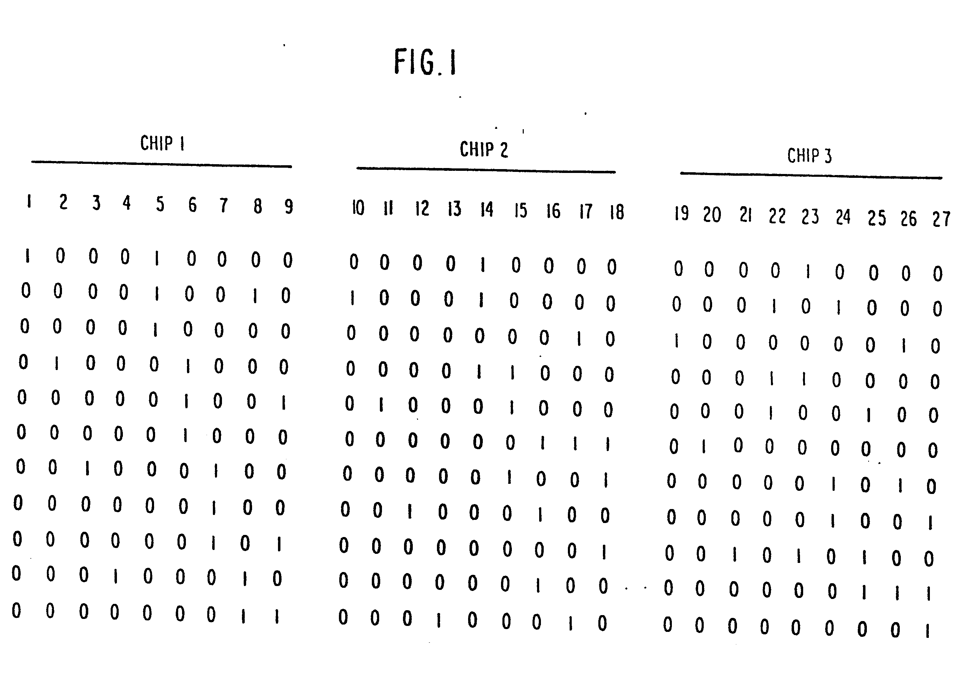

Figure 1 shows an H-Matrix for true single error correction
and double error detection in accordance with this invention.
This H-Matrix is logically organized on three "by 9" chips.
The organization utilizes the standard 16 data bit per data
word format but employs 11 check bits. The H-Matrix of
Figure 1 is shown as used conventionally in, for example,
Hsiao, supra. and in the Encyclopedia of Computer Science,
Ralston and Meek, 1976, pp. 547-548. Figure 1 is a hardware
map defining the manner in which the parity generating circuits and parity checking circuits are constructed to perform
true single error correction and double error detection. The
"1" marks in any horizontal row denote bits which need to be
checked by a particular parity checking circuit. The same
consideration applies to the parity generating circuit with
the exception that only the data bit portion, that is, bits number 5-9, 14-18, and 22-27 of the H-Matrix are utilized. Hence, while the H-Matrix per se forms a part of the invention, the implementation will be self-evident to one of ordinary skill once the matrix is given.

The implementation of a matrix is for example described in U.S. Patent 3,623,155. A person of working skill in this technology could implement the H-Matrix of this invention in accordance with the system taught by this patent for the implementation of check bit generators and parity generating circuits.

The H-Matrix of Figure 1 satisfies the construction rules set forth in the above patent that each information and check bit be assigned in an odd number of code groups. That is, each column has an odd number of ones so that all column vectors are of odd weight. Secondly, the total number of ones in the H-Matrix is minimized. Finally, the number of ones in each row of the matrix is approximately equal to or as close as possible to the average number, that is, the total number of ones in the matrix divided by the total number of rows. By inspection, the H-Matrix has 59 "ones" in 11 rows or an average of approximately 5.5 ones per row. No row has less than 4 ones or more than 6.

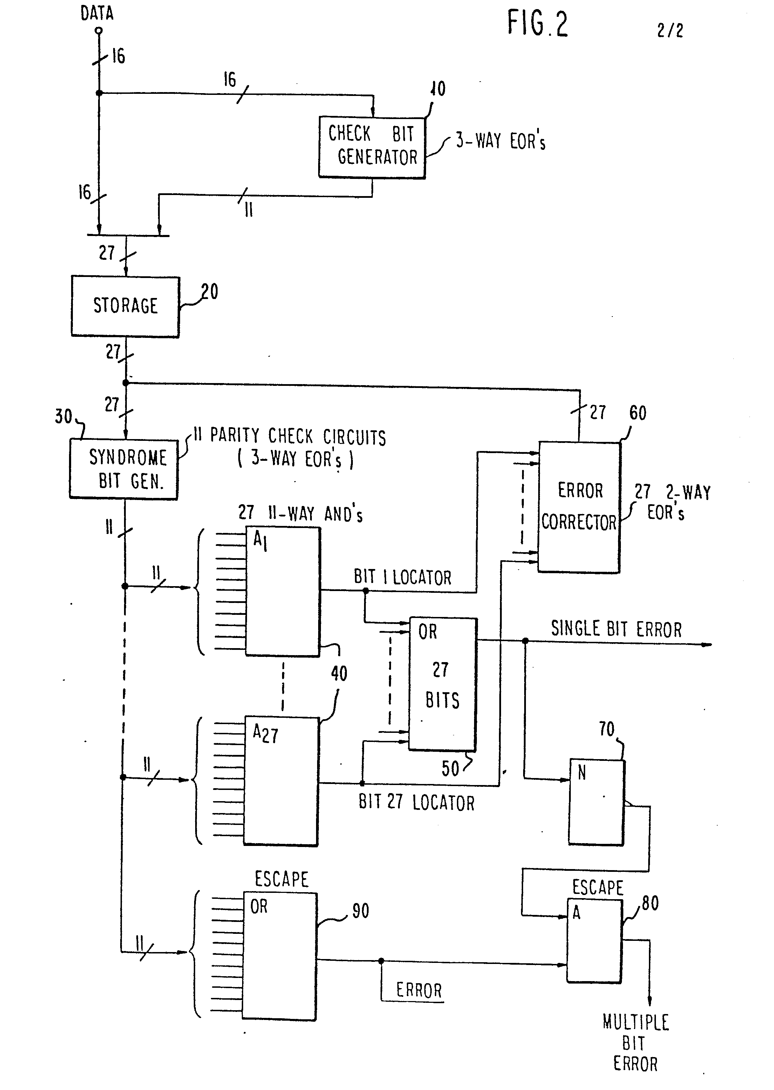

Referring now to Figure 2, an implementation of the present invention is shown schematically. Each data word comprises 16 data bits. In accordance with conventional practice, the notation "/" indicates the number of bit lines in a particular data bus. The 16 bit data word (/16) is supplied to a check bit generator 10 comprising a number of 3-way Exclusive-OR circuits. The check bit generator 10 provides an output in the form of 11 check bits which are then combined with the 16 bit data word to form a 27 bit data word stored on three "by 9" chips. When data is read from storage (20), the 27 bit word is delivered to a syndrome bit generator (30) that performs 11 parity checks. The parity check circuits comprise one circuit for each check bit.

While Figure 2 utilizes separate circuitry for the check bit generator and the syndrome bit generator (30), it is apparent that the same set of Exclusive-OR (EOR) circuits can be used to provide both check bit generation and syndrome bit generation function. If such a mode of implementation were used, a switching circuit would be needed to switch the EOR circuits from a storage writing operation to a storage read out operation. However, to eliminate the extra switching circuits, the technology generally employs separate circuitry.

Single bit correction is accomplished in a manner known in the technology using an error corrector. However, in accordance with this invention the inputs to the error corrector are different than in the prior art. That is, the error corrector receives outputs corresponding to the outputs of 27 error locators 40 each receiving the 11 syndrome bits to indicate a single error position. The error corrector 60, comprising 27 2-way EOR circuits receives also each of the 27 bits from storage. Only one of the error locator outputs will have a "1" level corresponding to the one erroneous bit position. That particular signal on the output line is used by the corrector to correct the erroneous output bit by inversion to an opposite binary value.

The present invention utilizing the H-Matrix of Figure 1 includes extra logic in the correction circuitry to determine whether a single bit failure has occurred or if a multiple bit failure is indicated. The H-Matrix insures that syndromes generated by the syndrome bit generators 30 by multiple bit failures will not match any of the syndromes for a single bit failure. Accordingly, the H-Matrix affirmatively precludes miscorrection of data bits that have not failed. As shown in Figure 2, error locators 40 comprising 27 11-way AND gates receive the 11 syndrome bits generated by the syndrome bit generator. This correction circuitry checks the syndromes and determines if the syndrome is all zeros or if an output matches one from the H-Matrix. If the syndrome output is all zeros, then no failure has occurred. If, however, a positive output occurs, then matching with the H-Matrix indicates whether a single bit failure has occurred at that bit position.

As shown in Figure 2, the 27 11-way ANDs produce 27 bit locator outputs. The error locator circuits 40 therefore all receive inputs from all 11 syndrome bits. This is a departure from prior SEC/DED schemes for only the syndrome bits which are coded binary "1" feed each error locator. Consequently, the system in Figure 2 insures that multiple errors will not activate an incorrect locator. The bit locator outputs are fed to an error corrector 60 comprising 27 2-way EORs. Accordingly, by using all 11 syndrome bits in each error locator, only a single bit failure will actuate a particular circuit. This represents a simplification from logic used in some SEC/DED error indicators where the syndrome bits must be exclusively EORed.

The 27 locator bit outputs are also fed to a 27-way locator OR gate 50 so that any output indicates the presence of an error. That OR output is then inverted in inverter 70 and fed to an escape detector AND gate 80.

An escape OR gate 90 receives the 11 syndrome bits such that an output indicates that a failure has occurred. As indicated, if the single bit error has occurred, a corresponding error locator will also be on, however the syndromes are unique for only a single bit error. Any output from the escape OR 90 then represents a multiple bit failure if an error locator OR is "off". The escape OR output is fed to the escape AND gate 80 receiving the inverted output of the ORed output of the 27 bit locators 40. A multiple bit error is signaled by the presence of one or more syndrome bit ones from the escape OR 90 gate coupled with a zero level, inverted output, i.e. a level one output from the inverter 70. The presence of no error locators active, that is, a positive output from the inverter 70 will indicate that the error is not of a single bit if an escape OR output exists. Accordingly, an output from the escape AND gate 80 will indicate the presence of a multiple bit error.

The present invention therefore represents a significant improvement over the prior art since it positively detects all escapes for 9 bit memory chips. It also attains this positive indication in a single pass through the combinational logic of Figure 2. Importantly, the implementation of Figure 2 allows for true single error correction while preventing all escapes.

It is apparent that modifications of the hardware implementation of this invention can be achieved while maintaining the integrity of the H-Matrix without departing from the essential scope of this invention.

CLAIMS

1.  A true single error correction and multiple error detection system for data words stored in a memory (20) having multiple data bits per chip comprising a check bit generator (10) receiving data bits and generating check bits in accordance with logical sequence and a syndrome bit generator (30) for generating syndrome bits from said data bits and check bits; said system being characterized in that it comprises :

    first logic means (40, 50) receiving each of the syndrome bits and producing an output for determining the presence of a true single error in one of said data and check bits and

    second logic means (90, 70) receiving each of the syndrome bits and the output of said first logic means for detecting the presence of a multiple bit error in the absence of a single error detected at the output of said first logic means.

2.  The system according to claim 1 wherein said first logic means comprises an array of AND circuits (40) equal to the number of data bits and check bits, each AND circuit receiving all of said syndrome bits and producing a number of bit locator outputs corresponding to the total number of bits and an OR circuit (50) receiving said bit locator outputs to determine the presence of a single erroneous data bit.

3.  The system according to claim 1 or 2 wherein said second logic means comprises an OR circuit (90) receiving each of said syndrome bits, means (70) to invert the output of said first logic means and, an AND circuit (80) receiving the output from said OR circuit receiving the syndrome bits and the inverted output of said first logic means to determine whether a multiple bit error exists in said data word.

13

**0100825**

4. The system according to any one of claims 1, 2 or 3 wherein each of said data words comprises 16 data bits and 11 check bits.

# FIG. 1

| BIT # | CHIP 1 | | | | | | | | | CHIP 2 | | | | | | | | | CHIP 3 | | | | | | | | |
|---|---|---|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 |
| | 1 | 0 | 0 | 0 | 1 | 0 | 0 | 0 | 0 | 0 | 0 | 0 | 0 | 1 | 0 | 0 | 0 | 0 | 0 | 0 | 0 | 0 | 1 | 0 | 0 | 0 | 0 |
| | 0 | 0 | 0 | 0 | 1 | 0 | 0 | 1 | 0 | 1 | 0 | 0 | 0 | 1 | 0 | 0 | 0 | 0 | 0 | 0 | 0 | 1 | 0 | 1 | 0 | 0 | 0 |
| | 0 | 0 | 0 | 0 | 1 | 0 | 0 | 0 | 0 | 0 | 0 | 0 | 0 | 0 | 0 | 0 | 1 | 0 | 1 | 0 | 0 | 0 | 0 | 0 | 0 | 1 | 0 |
| | 0 | 1 | 0 | 0 | 0 | 1 | 0 | 0 | 0 | 0 | 0 | 0 | 0 | 1 | 1 | 0 | 0 | 0 | 0 | 0 | 0 | 1 | 1 | 0 | 0 | 0 | 0 |
| | 0 | 0 | 0 | 0 | 0 | 1 | 0 | 0 | 1 | 0 | 1 | 0 | 0 | 0 | 1 | 0 | 0 | 0 | 0 | 0 | 0 | 1 | 0 | 0 | 1 | 0 | 0 |
| | 0 | 0 | 0 | 0 | 0 | 1 | 0 | 0 | 0 | 0 | 0 | 0 | 0 | 0 | 0 | 1 | 1 | 1 | 0 | 1 | 0 | 0 | 0 | 0 | 0 | 0 | 0 |
| | 0 | 0 | 1 | 0 | 0 | 0 | 1 | 0 | 0 | 0 | 0 | 0 | 0 | 0 | 1 | 0 | 0 | 1 | 0 | 0 | 0 | 0 | 0 | 1 | 0 | 1 | 0 |
| | 0 | 0 | 0 | 0 | 0 | 0 | 1 | 0 | 0 | 0 | 0 | 1 | 0 | 0 | 0 | 1 | 0 | 0 | 0 | 0 | 0 | 0 | 0 | 1 | 0 | 0 | 1 |
| | 0 | 0 | 0 | 0 | 0 | 0 | 1 | 0 | 1 | 0 | 0 | 0 | 0 | 0 | 0 | 0 | 0 | 1 | 0 | 0 | 1 | 0 | 1 | 0 | 1 | 0 | 0 |
| | 0 | 0 | 0 | 1 | 0 | 0 | 0 | 1 | 0 | 0 | 0 | 0 | 0 | 0 | 0 | 1 | 0 | 0 | 0 | 0 | 0 | 0 | 0 | 0 | 1 | 1 | 1 |
| | 0 | 0 | 0 | 0 | 0 | 0 | 0 | 1 | 1 | 0 | 0 | 0 | 1 | 0 | 0 | 0 | 1 | 0 | 0 | 0 | 0 | 0 | 0 | 0 | 0 | 0 | 1 |

0100825

1/2

FIG.2 2/2

0100825